Europäisches Patentamt

(19) European Patent Office

Office européen des brevets

(11) Publication number: **0 090 780**
**B1**

(12) **EUROPEAN PATENT SPECIFICATION**

(45) Date of publication of patent specification: **03.06.87**

(51) Int. Cl.⁴: **F 16 B 15/04**

(21) Application number: **83850063.5**

(22) Date of filing: **15.03.83**

(54) Fixing device.

(30) Priority: **24.03.82 SE 8201866**

(43) Date of publication of application:
**05.10.83 Bulletin 83/40**

(45) Publication of the grant of the patent:
**03.06.87 Bulletin 87/23**

(84) Designated Contracting States:
**AT BE CH DE FR GB IT LI NL**

(56) References cited:
**DE-U-8 129 970**
**FR-A-2 122 263**
**FR-A-2 174 606**
**FR-A-2 383 348**
**US-A-2 362 969**
**US-A-2 674 149**
**US-A-3 878 756**
**US-A-3 894 469**

(73) Proprietor: **Rube, Jan**
**P.O. Box 46**
**S-261 08 Glumslöv (SE)**

(72) Inventor: **Rube, Jan**
**P.O. Box 46**
**S-261 08 Glumslöv (SE)**

(74) Representative: **Burman, Tore et al**
**Bergling & Sundbergh AB P.O. Box 7645**
**S-103 94 Stockholm (SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

### Technical Field

The invention relates to a fixing device of the type stated in the preamble of claim 1 (US—A—3878756).

### Background

The building material usually called lightweight concrete has come into use to an ever greater extent in recent years due to its good insulation properties, and is used in buildings for walls, roofs, ceilings and floors. This structural material has, however, a drawback in that there is difficulty in fastening anything into it solidly with sufficient strength, and accordingly there are problems in attaching roofing felt, false ceilings, ventilation ducts, plumbing and electrical fittings etc. to walls and floors constructed in the material. An ordinary nail or screw driven into lightweight concrete can generally by pulled out with the fingers, and does not sit very much more solidly if the nail or screw has been driven into a wooden or plastic plug inserted in a hole drilled beforehand in the material.

A number of other configurations of fixing devices have therefore been proposed which give a more solid anchorage in these porous building materials. Such fixing devices are generally of the expander type and are usually distinguished in that they comprise a tubular member bifurcated for practically the whole of its length which, by the insertion of a screw, the action of a screw in coaction with a plug inserted between the two parts of the plug or by the action of a tool has its legs forced apart or "expanded" in the material into which the device has been placed. See US—A—3878756 and FR—A—2122263. Such fixing devices have been rather satisfactory, but the lately increased demands for saving energy have required the manufacturers of lightweight concrete to make their products even more porous, and thereby lighter, to increase heat insulation ability. The strength values of the material are of course decreased at the same time, so that at the bulk density of 300—400 kg/m$^3$ for lightweight concrete none of the fixing devices so far proposed gives satisfactory anchorage.

The invention has therefore been directed towards the task of providing a new type of fixing device, which gives a better anchorage in lightweight concrete products so far on the market, and satisfactory anchorage with the new lightweight concrete having very low bulk densities which is under development.

### Disclosure of Invention

A fixing device for attaching an object to porous building material of the lightweight concrete type, comprising a first part in the form of a bladeshaped support member having diverging side edges in the direction in which the support member is to be driven into the material, and a locking member made from strip metal and with a substantially U-shaped configuration, said locking member being adapted to be driven into the material to straddle the diverging edges of the support member, said support member also being adapted to carry the withdrawal load on the device by supporting against the legs of the locking member, is characterized in that the spacing between the legs of the locking member corresponds to the width of the support member before its side edges begin to diverge, and in that the legs of the locking member are bendable in the plane of the U-configuration so as to permit their gliding along the diverging edges of the support member, which previously has been driven into the material, when the locking member is driven into the material. Embodiments of the inventive device are stated in the subclaims 2—6.

Both said members are suitably stamped from steel strip, the support member suitably being made of uniform width for a small distance from the end corresponding to the head of a nail, before the width successively increases towards the tip or "sharp" edge, i.e. before the side edges begin to diverge. The locking member is bent into a U-shape with its legs spaced to accommodate the least width of the support member. These legs are suitably provided with a centrally placed groove for stiffening the structure and also for guidance against the diverging edges of the support member during driving.

It will be easily understood that if the support member of a fixing device in accordance with the invention is subjected to a load in the withdrawing direction, this load is translated into a pressure, directed away from the surfaces of the legs of the locking member, towards the surrounding substructure, and substantially uniformly distributed over the collected contact surface of the locking member legs against the material into which the fixing device has been driven. The fixing device may be adapted to different loads by suitable selection of driving depth, degree of divergence for the contour of the support member and width of leg in the locking member. It is also clear that if required, the fixing device can be removed after being driven in, namely by first withdrawing the locking member, which then runs in the grooves formed during driving it into place, subsequent to which the support member may be withdrawn.

The head end of the support member in accordance with the invention is used for the conventional suspension or attachment of an object which is to be fixed to the substructure, e.g. a wall or ceiling made from the porous building material. In one embodiment the head end is bifurcated for a short distance, and the flaps thus formed are folded over to form a head for retaining a washer, e.g. if it is a question of attaching roofing felt to a lightweight concrete roof. In a second embodiment of the inventive fixing device, the support member is provided with a hole in the uniformly wide portion thereof, projecting from the substructure, for accommodating attachment means for a duct or other item to be installed in the building. The projecting portion of the support member could also be provided with one or more recesses in its parallel side edges for suitably adapted hooks or the like for attaching objects to the fixing device.

Description of Drawings

A pair of suitable embodiments of the invention are illustrated on the accompanying drawing, were

Fig. 1 is a perspective view of a flat bladeshaped support member,

Fig. 2 is a perspective view of a locking member,

Fig. 3 illustrates the locking member driven into a lightweight concrete wall with the locking member then slipped over its projecting portion,

Fig. 4 illustrates both members driven into a lightweight concrete wall,

Figs. 5 and 6 illustrate in plan a side view, respectively, a second embodiment of the locking member,

Fig. 7 is a plan view of a washer intended for attaching roofing felt to a lightweight concrete roof, using the support member of Figs. 5 and 6, and

Fig. 8 finally illustrates the use of said member together with the washer of Fig. 7 in attaching roofing felt to a lightweight concrete substructure.

Embodiments

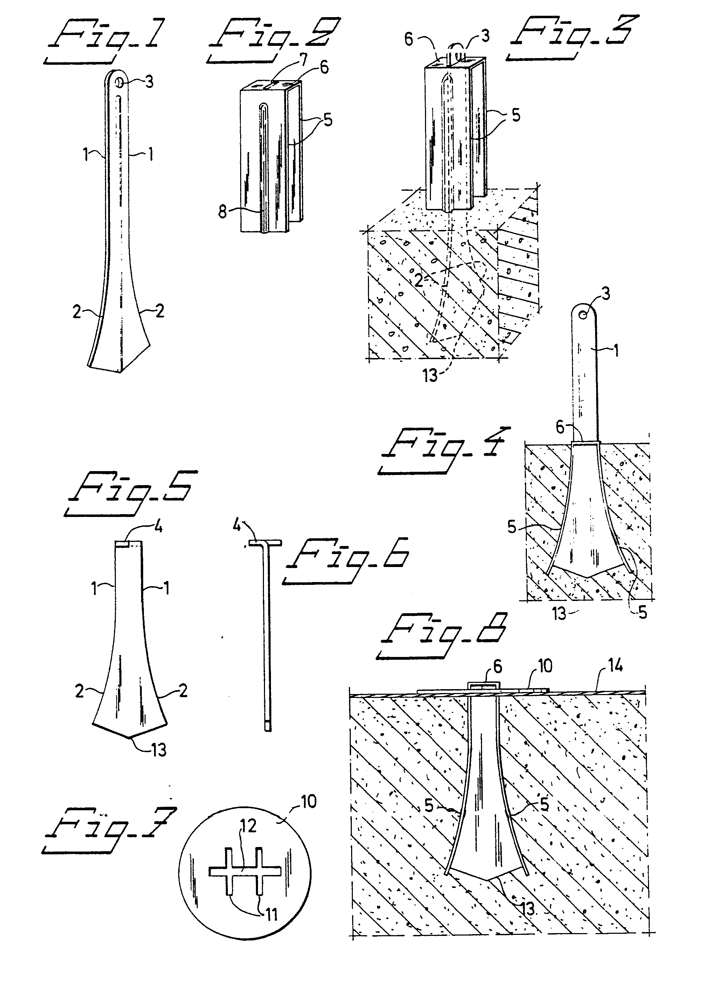

As will be seen from the drawings, the inventive support member has a configuration consisting of a portion with parallel side edges 1 and a portion with side edges 2 diverging in the direction in which the member is to be driven. The first-mentioned portion with parallel side edges is implemented with attachment means for an object which is to be kept in place with the aid of the fixing device, said attachment means being a hole 3 in Figs. 1—4 and a flattened head 4 in the embodiment according to Figs. 5 and 6.

The locking member is implemented as a U-shaped, bent metal strip to form both legs 5 and their uniting web 6. In use together with the locking member illustrated in Figs. 1—4, a slot 7 is formed in the web 6, through which the parallel portion of the support member can be passed, so that the locking member may be driven home. This slot 7 is naturally not required for coaction with the support member according to Figs. 5 and 6. In all the embodiments, the legs 5 are suitably provided with centrally placed grooves or creases 8 for stiffening purposes, and also for guidance against the diverging edges of the support member during driving the locking member into place.

The support member as well as the legs 5 of the locking member have considerably less thickness than width. For most purposes, a thickness of about 2 mm has been found satisfactory when the other dimensions of the support member are a length of about 100—150 mm, least width about 10 mm and greatest width about 25—30 mm. If necessary, the support member can also be stiffened by a longitudinal pressed groove.

For fixing devices intended for attaching roofing felt and the like, a suitable washer 10, may be used, this washer being provided with guiding slots 11 for the legs 5 and a through passage or guiding groove 12 for the locking member. In Fig. 8 there is ilustrated how roofing felt 14 is attached to the lightweight concrete substructure with the aid of the washer 10, which is retained by a support member having a head 4 consisting of small flaps bent in opposing directions and at 90° to said member, the locking member with its legs 5 being driven home so that its web comes against the head 4. In this case the locking member does not need to be provided with the slot 7 since its web is outside the head 4 the whole time.

As will be seen in Figs. 3, 4 and 8 it is advantageous for the legs 5 to be made with a length relative the diverging edges 2 of the support member such that they penetrate somewhat deeper than the support member on being driven home. The tip 13 of the locking member has been shown as triangular, with an obtuse tip angle, but it may also be a single edge at an angle to the axis of said member.

**Claims**

1. Fixing device for attaching an object to porous building material of the lightweight concrete type, comprising a first part in the form of a bladeshaped support member having diverging side edges (2) in the direction in which the support member is to be driven into the material, and a locking member made from strip metal and with a substantially U-shaped configuration, said locking member being adapted to be driven into the material to straddle the diverging edges (2) of the support member, said support member also being adapted to carry the withdrawal load on the device by supporting against the legs (5) of the locking member characterized in that the spacing between the legs (5) of the locking member corresponds to the width of the support member before its side edges (2) begin to diverge, and in that the legs (5) of the locking member are bendable in the plane of the U-configuration so as to permit their gliding along the diverging edges of the support member, which previously has been driven into the material, when the locking member is driven into the material.

2. Fixing device as claimed in claim 1 characterized in that the legs (5) are provided with central longitudinal grooves or creases (8) for guidance against the edges (1, 2) of the support member when the locking member is driven home.

3. Fixing device as claimed in claim 1 or 2, characterized in that a portion of the support member has parallel side edges (1) and is provided with means (3) for attaching objects intended to be fastened to the device, and in that there is a slot (7) in the web (6) of the locking member, adapted to permit the passage of the portion of the support member having parallel side edges.

4. Fixing device as claimed in claim 1 or 2, characterized in that the outer end of the support member is enlarged to form a head (4), and in that the device further comprises, for the case where the fixing device is to be used for securing roofing felt of the like, a washer (10) provided with guiding slots (11, 12) for receiving both said members.

5. Fixing device according to claim 4, characterized in that the head (4) is formed by bifurcating the outer end of the support member for a short distance to form flaps which are bent over in opposite directions at an angle of about 90°.

6. Fixing device as claimed in any of the preceding claims, characterized in that the support member is provided with a central longitudinal groove or crease, and in that the slot (7) in the web (6) of the locking member and the slot (12) in the washer (10), when such is used, are provided with a corresponding recess.

**Patentansprüche**

1. Befestigungseinrichtung zum Befestigen eines Gegenstandes an einem porösen Baumaterial von Leichtbetontyp mit einem ersten Teil in der Form eines blattförmigen Stützteils mit in der Richtung, in der das Stützteil in das Material getrieben werden soll, divergierenden Seitenkanten (2) und einem Verankerungsteil aus einem Streifenmetall und mit im wesentlichen U-förmiger Gestalt, wobei das Verankerungsteil so ausgebildet ist, daß es in das Material getrieben werden kann und dabei die divergierenden Kanten (2) des Stützteils auseinandergespreizt werden, und wobei das Stützteil auch so ausgebildet ist, daß es die Zugbelastung auf die Einrichtung trägt, indem es sich auf den Schenkeln (5) des Verankerungsteils abstützt, dadurch gekennzeichnet, daß der Zwischenraum zwischen den Schenkeln (5) des Verankerungsteils der Breite des Stützteils entspricht, bevor seine Seitenkanten (2) zu divergieren beginnen, und daß die Schenkel (5) des Verankerungsteils in der Ebene der U-Gestalt derart biegbar sind, daß sie entlang den divergierenden Kanten des Stützteils, welches vorher in das Material getrieben wurde, gleiten können, wenn das Verankerungsteil in das Material getrieben wird.

2. Befestigungseinrichtung nach Anspruch 1, dadurch gekennzeichnet, daß die Schenkel (5) mit mittigen Längsnuten oder -falten (8) als Führung an den Kanten (1, 2) des Stützteils, wenn das Verankerungsteil eingetrieben wird, versehen sind.

3. Befestigungseinrichtung nach Anspruch 1 oder 2, dadurch gekennzeichnet, daß ein Teil des Stützteils parallele Seitenkanten (1) hat und mit Einrichtungen (3) zur Befestigung von Gegenständen, die an der Einrichtung fixiert werden sollen, vorgesehen sind und daß ein Schlitz (7) in dem Steg (6) des Verankerungsteils vorhanden ist, welcher so ausgebildet ist, daß der Teil des Stützteils mit parallelen Seitenkanten hindurchgeführt werden kann.

4. Befestigungseinrichtung nach Anspruch 1 oder 2, dadurch gekennzeichnet, daß das äußere Ende des Stützteils unter Bildung eines Kopfes (4) verbreitert ist und daß die Einrichtung außerdem im Falle, daß die Befestigungseinrichtung zur Befestigung von Dachpappe oder dergleichen verwendet werden soll, eine Unterlegscheibe (10) aufweist, die mit Führungsschlitzen (11, 12) zur Aufnahme beider Teile versehen ist.

5. Befestigungseinrichtung nach Anspruch 4, dadurch gekennzeichnet, daß der Kopf (4) durch Gabelung des äußeren Endes des Stützteils über einen kurzen Abstand unter Bildung von Laschen, die in entgegengesetzten Richtungen in einem Winkel von etwa 90° umgebogen sind, gebildet ist.

6. Befestigungseinrichtung nach einem der vorausgehenden Ansprüche, dadurch gekennzeichnet, daß das Stützteil mit einer mittigen Längsnut oder -falte versehen ist und daß der Schlitz (7) in dem Steg (6) des Verankerungsteils und der Schlitz (12) in der Unterlegscheibe (10), wenn eine solche verwendet wird, mit einer entsprechenden Ausnehmung versehen sind.

**Revendications**

1. Dispositif de fixation pour relier un objet à un matériau de construction poreux du type béton léger comprenant une première partie se présentant comme un élément de support en forme de lame ayant des bords latéraux (2) divergent dans la direction dans laquelle l'élément de support doit être enfoncé dans le matériau, et un élément de blocage réalisé dans un métal en bande et présentant une configuration en forme de U, ledit élément de blocage étant adapté pour être enfoncé dans le matériau pour chevaucher les bords divergents (2) de l'élément de support, ledit élément de support étant également adapté pour supporter la charge de retrait sur le dispositif en portant contre les pattes (5) de l'élément de blocage caractérisé en ce que l'espace ménagé entre les pattes (5) de l'élément de blocage correspond à la largeur de l'élément de support, avant que ses bords latéraux (2) commencent à diverger, et en ce que les pattes (5) de l'élément de blocage peuvent être repliées dans le plan de la configuration en U de manière à permettre leur glissement le long des bords divergents de l'élément de support qui a été enfoncé au préalable dans le matériau, lorsque l'élément de blocage est enfoncé dans le matériau.

2. Dispositif de fixation selon la revendication 1, caractérisé en ce que les pattes (5) sont pourvues de rainures ou plis longitudinaux (8) de guidage contre les bords (1, 2) de l'élément de support lorsque l'élément de blocage est enfoncé en position.

3. Dispositif de fixation selon les revendications 1 ou 2, caractérisé en ce qu'une partie de l'élément de support présente des bords latéraux parallèles (1) et est muni de moyens (3) pour fixer des objets destinés à être attachés au dispositif et en ce qu'une fente (7) ménagée dans le flasque (6) de l'élément de blocage est adaptée pour permettre le passage de la partie de l'élément de support qui présente des bords latéraux parallèles.

4. Dispositif de fixation selon les revendications 1 ou 2, caractérisé en ce que l'extrémité externe de l'élément de support est élargie pour former une tête (4) et en ce que le dispositif comporte en outre, au cas où le dispositif de fixation est utilisé pour fixer au toit du carton bitumé pour toiture ou analogue, une rondelle 10 munie de fentes de guidages (11, 12) pour recevoir les deux dits éléments.

5. Dispositif de fixation selon la revendication 4, caractérisé en ce que la tête (4) est formée par l'extrémité externe de l'élément de support fendue sur une courte distance pour former des rabats qui sont repliés en direction opposée suivant un angle de 90° environ.

6. Dispositif de fixation selon l'une quelconque des revendications précédentes, caractérisé en ce que l'élément de support est muni d'une rainure ou pli central longitudinal et en ce que la fente (7) du flasque (6) de l'élément de blocage et la fente (12) dans la rondelle (10), lorsque celle-ci est utilisée, sont munies d'un logement correspondant.

Fig.1 Fig.2 Fig.3 Fig.4 Fig.5 Fig.6 Fig.7 Fig.8